# EUROPÄISCHE PATENTSCHRIFT

(11) **EP 4 411 162 B1**
(45) Veröffentlichungstag und Bekanntmachung des Hinweises auf die Patenterteilung: **30.07.2025**
(21) Anmeldenummer: 24150752.4
(22) Anmeldetag: 08.01.2024
(51) Int. Cl.: F16D 66/00, F16D 66/02

(54) **BREMSE MIT EINER EINRICHTUNG ZUR ERMITTLUNG EINER VERSCHLEISSGRENZE**
BRAKE WITH A DEVICE FOR DETERMINING A WEAR LIMIT
FREIN AVEC UN DISPOSITIF POUR DÉTERMINER UNE LIMITE D'USURE

(30) Priorität: 13.01.2023 DE 102023100789
(43) Veröffentlichungstag der Anmeldung: 07.08.2024
(73) Patentinhaber: Zollern GmbH & Co. KG, 88518 Herbertingen/Württemberg (DE)
(72) Erfinder: Schlieske, Harald, 88512 Mengen (DE)
(74) Vertreter: SSM Sandmair

(56) Entgegenhaltungen:
- EP-A1- 0 567 155
- EP-B1- 0 588 926
- EP-B1- 3 717 323
- US-A1- 2007 256 901
- US-A1- 2013 068 571
- US-A1- 2018 017 119
- US-A1- 2019 225 202
- US-A1- 2020 307 530
- US-A1- 2021 229 651
- US-B2- 10 941 826
- US-B2- 11 396 285

## Beschreibung

Die Erfindung betrifft eine Bremse, wie zum Beispiel eine Lamellenbremse, mit einer Einrichtung zur Ermittlung einer Verschleißgrenze. Die Bremse kann vorzugsweise als Haltebremse oder alternativ als Betriebsbremse ausgebildet sein, beispielsweise zum Feststellen (Haltebremse) oder zum Abbremsen (Betriebsbremse) einer Seilwinde. Die Seilwinde kann Teil einer Baumaschine, wie z.B. eines Seilbaggers oder eines Krans sein. Allgemein lässt sich die Bremse für einen Fahrantrieb, einen Antrieb einer Seilwinde, eines Drehkranzes oder einer Tunnelbohrmaschine einsetzen.

Bremsen beziehungsweise deren Bremskörper und der Bremsbeläge unterliegen einem gewissen Verschleiß. Ein gewisser Verschleiß beeinträchtigt die Funktion der Bremse nicht, solange er innerhalb einer Verschleißgrenze bleibt. Ist die Verschleißgrenze erreicht, sollte die Bremse oder zumindest deren Bremskörper ausgetauscht werden.

Einrichtungen zur Ermittlung einer Verschleißgrenze in einer Bremse, beispielsweise mittels Sensoren, sind an sich bekannt. Bei den bekannten Lösungen ist der Sensor so angeordnet, dass er von Öl, das sich im Inneren der Bremse befindet, und von den Bremskörpern stammendem Belagsabrieb getrennt ist, wodurch eine Fehlfunktion des Sensors vermieden wird. Solche Lösungen sind jedoch konstruktiv aufwendig und benötigen Bauraum.

Die US 2019/0225202 A1 beschreibt ein Verschleißmesssystem für einen Bremsbelag, das einen Sensor, der an einem Bremssattel angeordnet ist, und einen Aktuator, der an einem verschiebbaren Kolben angeordnet ist, umfasst. Der Aktuator betätigt den Sensor, um ein Signal zu erzeugen, das die Position des Aktuators relativ zu dem Sensor angibt. Wenn der Bremsbelag unverschlissen ist, sind die Distanzen, die der Sensor und der mit dem Kolben verschiebbare Aktuator relativ zueinander zurücklegen, und somit die Änderung des Lageverhältnisses zwischen Sensor und Aktuator gering. Wenn der Bremsbelag verschlissen ist, nehmen diese Distanzen und die Änderung des Lageverhältnisses zu.

Der vorliegenden Erfindung liegt die Aufgabe zugrunde, eine Bremse mit einer Einrichtung zur Ermittlung einer Verschleißgrenze von Bremskörpern beziehungsweise deren Bremsbelägen, anzugeben, die konstruktiv einfach und platzsparend aufgebaut ist und zudem verlässlich die Verschleißgrenze ermittelt.

Die Aufgabe wird mit der Bremse mit den Merkmalen des Anspruchs 1 gelöst. Vorteilhafte Weiterbildungen ergeben sich aus den abhängigen Ansprüchen, der Beschreibung und den Figuren.

Die Bremse umfasst ein Gehäuse, mindestens einen ersten Bremskörper, wie zum Beispiel einen oder mehrere erste Bremskörper, mindestens einen zweiten Bremskörper, wie zum Beispiel einen oder mehrere zweite Bremskörper, und eine Druckstückeinheit mit einem Druckstück, das relativ zu dem Gehäuse in eine erste Richtung verschiebbar ist, um den mindestens einen ersten Bremskörper und den mindestens einen zweiten Bremskörper zum Bremsen gegeneinander zu drücken, das heißt die Bremse zu schließen, und in eine zweite Richtung, die der ersten Richtung entgegengesetzt ist, zum Lösen der Bremse verschiebbar ist, das heißt, die Bremse zu öffnen. Bei einer Lamellenbremse können die ersten und zweiten Bremskörper als Bremslamellen ausgebildet sein.

Beispielsweise kann ein erster Bremskörper zwischen zwei zweiten Bremskörpern angeordnet sein. Alternativ oder zusätzlich kann ein zweiter Bremskörper zwischen zwei ersten Bremskörpern angeordnet sein. Die Bremswirkung zwischen dem mindestens einen ersten Bremskörper und dem mindestens einen zweiten Bremskörper basiert auf einem Reibschluss, der durch die Kraft, mit dem das Druckstück den mindestens einen ersten Bremskörper und den mindestens einen zweiten Bremskörper gegeneinanderdrückt, bewirkt wird. Je stärker das Druckstück die ersten und zweiten Bremskörper gegeneinanderdrückt, desto höher wird die Reibkraft und die Bremswirkung der Bremse.

Beispielsweise kann der mindestens eine erste Bremskörper in Bezug auf das Gehäuse, insbesondere am Gehäuse oder einem am Gehäuse oder vor dem Gehäuse gebildeten ersten Bremskörperhalter um eine Drehachse verdrehfest angeordnet sein.

Der mindestens eine zweite Bremskörper kann verdrehfest an einem zweiten Bremskörperhalter befestigt sein. Der mindestens eine zweite Bremskörper oder/und der zweite Bremskörperhalter können um die Drehachse relativ zu dem Gehäuse oder dem mindestens einen ersten Bremskörper verdrehbar sein. Der mindestens eine zweite Bremskörper kann verdrehfest an dem zweiten Bremskörperhalter befestigt sein.

An der Druckstückeinheit kann eine Detektionsfläche zum Wechselwirken mit einem Sensor gebildet sein. Beispielsweise kann die Detektionsfläche an dem Druckstück oder an einem weiteren Teil der Druckstückeinheit gebildet sein. Das weitere Teil der Druckstückeinheit, beispielsweise ein Detektionskörper, kann beispielsweise in Bezug auf das Druckstück verschiebbar angeordnet sein, beispielsweise von dem Druckstück axial verschiebbar gelagert sein. Insbesondere kann das Teil relativ zu dem Druckstück in die erste und zweite Richtung, in die auch das Druckstück verschiebbar ist, verschiebbar gelagert sein. Das Druckstück und/oder das Teil können entlang der oder parallel zur Drehachse in die erste und zweite Richtung verschiebbar sein.

Bevorzugt ist das Teil ein Detektionskörper. Die Druckstückeinheit kann also einen Detektionskörper umfassen, der relativ zu dem Druckstück verschiebbar, insbesondere axial verschiebbar ist und die Detektionsfläche aufweist.

Die Bremse weist ferner einen Sensor auf, wie zum Beispiel einen induktiven Sensor, einen kapazitiven Sensor, einen Reed-Kontakt oder einen Mikroschalter. Der Sensor ist ausgebildet, ein Lageverhältnis oder eine Änderung des Lageverhältnisses zwischen ihm und der Detektionsfläche zu detektieren. In Ausführungen, in denen die Detektionsfläche von einem relativ zu dem Druckstück verschiebbaren Teil oder Detektionskörper gebildet wird, ist es bevorzugt, dass der Sensor an dem Gehäuse befestigt oder zumindest relativ zu dem Gehäuse in die erste und zweite Richtung verschiebefest angeordnet ist. In Ausführungsformen, in denen die Detektionsfläche an dem Druckstück oder einem in Bezug auf das Druckstück feststehenden Teil angeordnet ist, ist es bevorzugt, dass der Sensor relativ zu dem Gehäuse in die erste Richtung und zweite Richtung axial verschiebbar ist.

Wenn die Bremskörper beziehungsweise deren Bremsbeläge verschleißen, wird bewirkt, dass das Druckstück in Vergleich zum nichtverschlissenen Zustand weiter in die erste Richtung verschiebbar ist. Die Bremse ist so ausgestaltet, dass, wenn die Bremse ihre Verschleißgrenze nicht erreicht hat, sich das Lageverhältnis zwischen dem Sensor und der Detektionsfläche während der Bewegung des Druckstücks in die erste Richtung, insbesondere bis in die Position des Druckstücks, in der die Bremse geschlossen ist, nicht ändert oder nur so unwesentlich ändert, dass der Sensor nicht auf die Änderung anspricht. Das heißt, dass sich der Sensor und das Druckstück axial relativ zueinander nicht bewegen oder nur unwesentlich axial relativ zueinander bewegen. Der technische Hintergrund ist der, dass der Sensor - je nach Bauart - eine gewisse Verschiebung zwischen Detektionsfläche und Sensor benötigt, dass er auf die Lageänderung anspricht.

Wenn die Bremse allerdings ihre Verschleißgrenze erreicht hat, kann sich das Druckstück, insbesondere bis es seine Position erreicht, in der die Bremse geschlossen ist, weiter in die erste Richtung als bei der nichtverschlissenen Bremse bewegen. Dabei ändert sich das Lageverhältnis zwischen dem Sensor und der Detektionsfläche während der Bewegung des Druckstücks in die erste Richtung durch eine Relativbewegung zwischen dem Sensor und der Detektionsfläche, insbesondere wesentlich, d. h. so stark, dass der Sensor auf die Lageänderung anspricht. Insbesondere ändert sich das Lageverhältnis um den Weg, um den das Druckstück weiter in die erste Richtung verschiebbar als bei der nichtverschlissenen Bremse. Diese Lageänderung kann von dem Sensor entsprechend ermittelt werden oder der Sensor spricht auf diese Lageänderung an.

Der Sensor ist ausgebildet, ein, insbesondere elektrisches, Signal auszugeben, aus dem die Änderung des Lageverhältnisses ermittelbar ist. Dieses elektrische Signal kann beispielsweise einer Steuerung oder einem Computer zugeführt werden, der es weiterverarbeitet und beispielsweise eine Ausgabeeinrichtung veranlasst, dem Bediener der Maschine ein optisches oder akustisches Signal auszugeben. Andere Funktionen, die durch das ausgegebene Signal ausgelöst werden, sind natürlich auch möglich.

Bevorzugt ist, dass, wenn die Bremse ihre Verschleißgrenze erreicht hat, das Druckstück während der Bewegung des Druckstücks in die erste Richtung um einen ersten Weg bewegbar ist, bei dem sich das Lageverhältnis zwischen dem Sensor und der Detektionsfläche nicht ändert, und um einen zweiten Weg bewegbar ist, bei dem sich das Lageverhältnis durch eine Relativbewegung zwischen dem Sensor und der Detektionsfläche, insbesondere wesentlich, ändert.

Beispielsweise kann sich der Sensor in Ausführungen, in denen er relativ zu dem Gehäuse axial verschiebbar ist, mit dem Druckstück um den ersten Weg mitbewegen. Am Ende des ersten Wegs kann der Sensor beispielsweise von einem Anschlag, der insbesondere gehäusefest angeordnet sein kann, blockiert werden. Bei der Bewegung des Druckstücks um den zweiten Weg wird die Detektionsfläche von dem an einer weiteren Bewegung in die erste Richtung blockierten Sensor wegbewegt, wodurch sich das Lageverhältnis ändert.

In bevorzugten Ausführungen ist die Detektionsfläche an einem relativ zu dem Bremskörper bewegbaren Teil, insbesondere Detektionskörper, gebildet, wobei während der Bewegung des Druckstücks in die erste Richtung um den ersten Weg sich das Druckstück relativ zu dem, insbesondere an dem Sensor anliegenden, Detektionskörper bewegt und der Detektionskörper relativ zu dem Sensor stillsteht. Am Ende des ersten Wegs kann die Bewegbarkeit des Druckstücks relativ zu dem Detektionskörper beispielsweise mittels eines, beispielsweise in Bezug auf das Druckstück feststehenden und/oder vom Druckstück gebildeten, Anschlags blockiert werden, sodass der Detektionskörper mit dem Druckstück um den zweiten Weg mitbewegt wird, wodurch sich die Detektionsfläche von dem gehäusefesten Sensor entfernt und sich das Lageverhältnis zwischen dem Sensor und der Detektionsfläche ändert.

Die Druckstückeinheit, insbesondere ein Detektionskörper, kann beispielsweise den Anschlag aufweisen, der ausgebildet ist, eine Bewegung des Detektionskörpers zu dem, beispielsweise gehäusefesten Sensor hin zu blockieren, insbesondere dann, wenn die Bremse verschlissen ist.

Beispielsweise kann eine Feder vorgesehen sein, welche den Detektionskörper in eine Richtung zu dem Sensor hin spannt, das heißt mit einer Federkraft beaufschlagt. Beispielsweise kann die Feder den Detektionskörper mit seiner Detektionsfläche gegen den Sensor oder eine Sensorfläche des Sensors drücken, insbesondere wenn die Bremse nicht verschlissen ist, beziehungsweise während sich das Druckstück in die erste Richtung um seinen ersten Weg bewegt. Wenn die Bremse verschlissen ist bzw. ihre Verschleißgrenze erreicht hat, d. h. wenn sich das Druckstück in die erste Richtung um seinen zweiten Weg bewegt, kann die Feder den Detektionskörper gegen den in Bezug auf das Druckstück feststehenden Anschlag drücken.

Die Feder kann sich, insbesondere mit einem Ende, an dem Detektionskörper und, insbesondere mit dem anderen Ende, an dem Druckstück abstützen. Die Feder kann als Wendelfeder ausgestaltet sein, die als Druckfeder wirkt. Auch andere Federarten sind möglich, solange sie den Detektionskörper in Richtung zu dem Sensor hin spannen können.

Der Anschlag, der bewirkt, dass der Detektionskörper die Bewegung des Druckstücks in die erste Richtung, insbesondere um den zweiten Weg, mitmacht, kann von einem Anschlagteil gebildet werden, das zusammen mit dem Detektionskörper in einer Ausnehmung oder Bohrung des Druckstücks, deren offenes Ende zum Sensor hin weist, aufgenommen ist. Der Detektionskörper oder ein radialer Vorsprung des Detektionskörpers kann axial zwischen dem Anschlagteil und dem Druckstück angeordnet und in die erste und zweite Richtung hin und her bewegbar sein. Die Feder kann sich wie gesagt am Detektionskörper um dem Druckstück abstützen und/oder zwischen dem Detektionskörper und dem Druckstück angeordnet sein. Das beispielsweise hülsenförmige Anschlagteil kann radial zwischen einem, insbesondere zylindrischen, Abschnitt des Detektionskörpers und dem Druckstück angeordnet sein. Der Detektionskörper kann sich durch das hülsenförmige Anschlagteil erstrecken.

Beispielsweise kann die Feder den Detektionskörper mit seiner Detektionsfläche an den gehäusefesten Sensor drücken. Insbesondere kann die Detektionsfläche an dem gehäusefesten Sensor anliegen, während das Druckstück um seinen ersten Weg in die erste Richtung bewegt wird. Der Detektionskörper oder sein radialer Vorsprung stößt am Ende des ersten Wegs an dem relativ zum Druckstück feststehenden Anschlag an, wodurch der Detektionskörper die Bewegung des Druckstücks in die erste Richtung mitmacht und die Detektionsfläche von dem Sensor wegbewegt wird. Der Sensor gibt dementsprechend ein Signal aus, aus dem die Änderung dieses Lageverhältnisses ermittelbar ist.

Die Bremse bildet einen Aufnahmeraum, der in Weiterbildungen zumindest teilweise mit Öl gefüllt sein kann. In dem Aufnahmeraum sind die Druckstückeinheit und zumindest ein Teil des Sensors angeordnet. Es hat sich herausgestellt, dass die erfindungsgemäße Anordnung von Sensor und Detektionsfläche widerstandfähig ist und die Verschleißgrenze zuverlässig ermittelt. In dem Aufnahmeraum können ferner der mindestens eine erste Bremskörper und der mindestens eine zweite Bremskörper angeordnet sein. Die Bremskörper sind zumindest teilweise in dem im Aufnahmeraum befindlichen Öl eingetaucht. Das Öl dient vorzugsweise dazu, den Verschleiß an den Bremskörpern herabzusetzen und die Bremskörper zu kühlen.

Der Aufnahmeraum kann von dem Gehäuse und der Welle eingefasst sein. Der Aufnahmeraum kann zwischen zwei Wellendichtungen angeordnet sein, die jeweils in einem Spalt zwischen der um die Drehachse drehbar am Gehäuse gelagerten Welle und dem Gehäuse angeordnet sind und den Aufnahmeraum abdichten.

Die Bremse kann ferner einen Druckraum aufweisen, der so ausgebildet ist, dass er, wenn er mit einem Fluid, insbesondere einer Flüssigkeit oder einem Gas, bedruckt wird, das Druckstück in die zweite Richtung bewegt. Der Druckraum kann von dem Gehäuse und dem Druckstück begrenzt oder eingefasst sein, so dass das Gehäuse und das Druckstück jeweils eine Wand des Druckraums bilden, auf die der Druck des Fluids eine Kraft ausüben kann. Ferner kann mindestens eine vorgespannte Bremsfeder vorgesehen sein, welche auf das Druckstück wirkt, insbesondere sich an dem Druckstück und dem Gehäuse abstützt, und das Druckstück in die erste Richtung verschiebt, wenn der Druckraum druckentlastet wird, und welche durch Bedrucken des Druckraums und der damit verursachten Bewegung des Druckstücks in die zweite Richtung gespannt wird. Bei plötzlichem Druckabfall im Fluid kann dadurch die Bremse durch die Bremsfeder geschlossen werden.

Die Erfindung wurde anhand mehrerer Ausführungen und Beispiele beschrieben. Im Folgenden wird eine besonders bevorzugte Ausführung anhand von Figuren beschrieben. Die dabei offenbarten Merkmale bilden jeweils einzeln und in jeglicher Merkmalskombination den Gegenstand der Erfindung weiter. Es zeigen:
Figur 1 eine perspektivische Ansicht einer Bremse im Teilschnitt,
Figur 2 eine Schnittansicht eines Abschnitts der in Figur 1 gezeigten Bremse, wobei die Bremse geöffnet und nicht verschlissen ist,
Figur 3 den Abschnitt aus Figur 2, wobei die Bremse geschlossen ist und
Figur 4 den Abschnitt aus Figur 2, wobei die Bremse verschlissen ist.

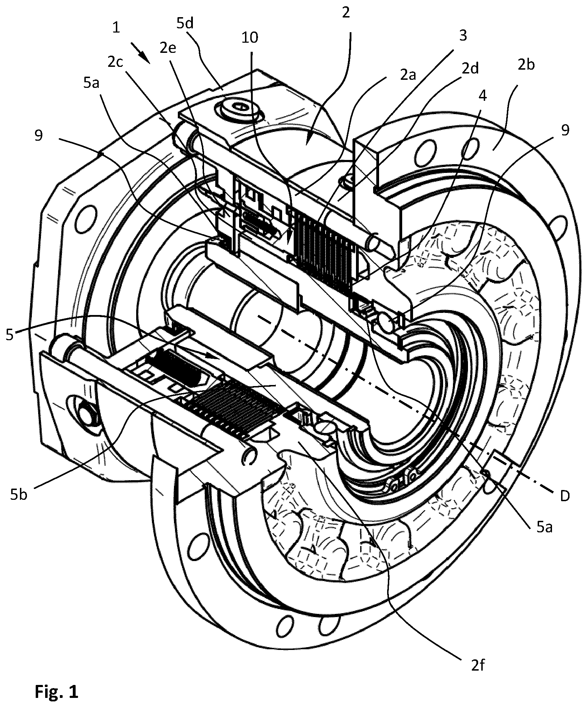

In der Figur 1 wird eine perspektivische Ansicht einer bevorzugten Bremse 1 dargestellt, die als Lamellenbremse ausgebildet ist. Die Bremse 1 weist ein Gehäuse 2 auf, das, wie in diesem Beispiel gezeigt, aus mehreren Gehäuseteilen bestehen kann. In diesem gezeigten Beispiel sind die mehreren Gehäuseteile mittels Schraubenbolzen 2a fest verbunden. Das Gehäuse 2 weist einen Flansch 2b auf, mit dem die Bremse 1 an einem Getriebe oder einer anderen Einrichtung, das bzw. die beispielsweise abtriebsseitig der Bremse 1 angeordnet sein kann, befestigbar oder anflanschbar ist.

Die Bremse 1 weist ferner eine, beispielsweise mehrteilige, Welle 5 auf, die in dem gezeigten Beispiel als Hohlwelle ausgebildet ist und mit einen oder mehreren Drehlagern 9 um eine Drehachse D drehbar an dem Gehäuse 2 gelagert oder abgestützt ist. Das Gehäuse 2 weist einen ersten Bremskörperhalter 2d auf, an dessen Innenfläche mehrere erste Bremskörper 3, insbesondere erste Bremslamellen, um die Drehachse D verdrehfest gelagert sind. Die Welle 5 weist einen zweiten Bremskörperhalter 5b auf, an dessen Außenfläche mehrere zweite Bremskörper 4, insbesondere zweite Bremslamellen, um die Drehachse D verdrehfest gelagert sind. Wenn die Welle 5 während des Betriebs um die Drehachse D relativ zu dem Gehäuse 2 gedreht wird, drehen sich die zweiten Bremskörper 4 relativ zu den ersten Bremskörpern 3 um die Drehachse D. Die Bremse 1 weist ferner ein Verbindungselement 5d, das in dem gezeigten Beispiel als Flansch ausgebildet ist und/oder Teil des Gehäuses 2 sein kann, auf. Das Verbindungselement 5d ist dazu ausgebildet, daran eine beispielsweise antriebsseitig der Bremse 1 angeordnete Einrichtung, insbesondere einen Antriebsmotor oder ein zwischen einem Antriebsmotor und der Bremse 1 angeordnetes Getriebe, zu befestigen oder anzuflanschen.

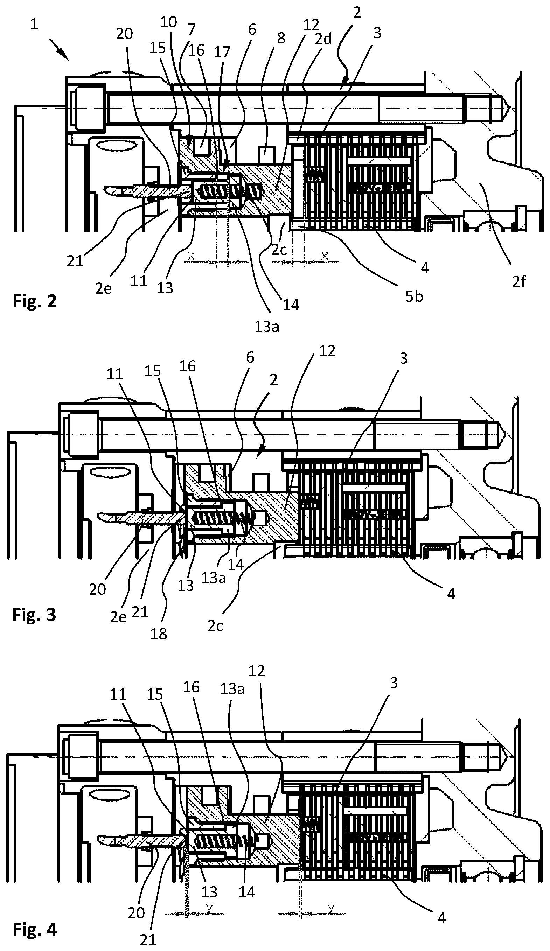

Die Bremse 1 weist ferner eine Druckstückeinheit 10 auf, deren Details am besten aus den Figuren 2 bis 4 erkennbar sind. Die Druckstückeinheit 10 weist ein Druckstück 12 auf, das entlang der Drehachse D in eine erste Richtung zu den ersten und zweiten Bremskörpern 3, 4 hin verschiebbar ist, um die Bremskörper 3, 4 zur Erzielung einer Bremswirkung gegeneinander zu drücken, das heißt die Bremse 1 zu schließen. Ferner ist das Druckstück 12 in eine der ersten Richtung entgegengesetzte Richtung verschiebbar, um sich von den Bremskörpern 3, 4 weg zu bewegen, um die Bremswirkung zu verringern bzw. die Bremse 1 zu öffnen.

In dem gezeigten Beispiel weist die Bremse 1 eine oder mehrere Bremsfedern 18 (Fig. 3) auf, die so angeordnet sind, dass sie das Druckstück 12 in die erste Richtung drücken und die Bremse 1 schließen können. Die mindestens eine Bremsfeder 18 stützt sich vorteilhaft an dem Druckstück 12 und dem Gehäuse 2 oder der Wand 2e des Gehäuses 2 axial ab, sodass die Bremsfeder 18 das Druckstück 12 in die erste Richtung vorspannt bzw. verschieben kann.

Zwischen dem Gehäuse 2 und dem Druckstück 12 ist eine Druckkammer 6 angeordnet, welche mit einem Fluid, beispielsweise Druckluft oder Öl bedruckt oder entlastet werden kann. Wenn die Druckkammer 6 mit Fluid bedruckt wird, wird das Druckstück 12 in die zweite Richtung bewegt, wodurch die Bremse 1 geöffnet wird (Fig. 2). Wird die Druckkammer 6 entlastet, drückt die mindestens eine Bremsfeder 18 das Druckstück 12 in die erste Richtung und schließt die Bremse 1. Zwischen einem Innenumfang des Gehäuses 2 und einem Außenumfang des Druckstücks 12 sind eine erste Dichtung 7 und eine zweite Dichtung 8, insbesondere Dichtringe, angeordnet, zwischen denen die Druckkammer 6 gebildet ist. Die Dichtungen 7, 8 dichten die Druckkammer 6 ab.

An dem Gehäuse 2 ist ein Sensor 20 angebracht. Der Sensor 20 ist in dem gezeigten Beispiel ein induktiver Sensor, kann jedoch auch ein anderer Sensortyp sein. Das Gehäuse 2 weist eine sich von einem Innenumfang radial zur Drehachse D hin erstreckende Wand 2e auf, die einen Durchbruch aufweist, in dem der Sensor 20 angeordnet ist, wobei auf der Seite der Wand 2e, die zu dem Druckstück 12 hin weist, ein Teil des Sensors 20 oder zumindest dessen Sensorfläche 21 angeordnet ist, und auf der anderen Seite der Wand 2e eine, beispielsweise zu einer Steuerung führende, Signalleitung vom Sensor 20 weggeführt wird. Die Wand 2e kann beispielsweise einen Sitz für eines der Drehlager 9, über die sich die Welle am Gehäuse 2 abstützt, und/oder für einen Wellendichtring 5a bilden, der einen Aufnahmeraum 2c nach außen abdichtet.

Die Bremse 1 bildet einen sich ringförmig um die Drehachse D erstreckenden Aufnahmeraum 2c, der von dem Gehäuse 2 und der Welle 5 eingefasst wird. Das Gehäuse 2 mit seinem Innenumfang begrenzt den Aufnahmeraum 2c radial und axial mit den sich nach innen erstreckenden Wänden 2e, 2f. Der Aufnahmeraum 2c ist zwischen den Wänden 2e, 2f angeordnet. Die Wand 2f kann beispielsweise als Widerlager für die von dem Druckstück 12 auf die Bremskörper 3, 4 aufgebrachte Kraft dienen bzw. die Bremskörper 3,4 sind zwischen dem Druckstück 12 und der Wand 2f einklemmbar. Die Welle 5 begrenzt den Aufnahmeraum 2c zur Drehachse D hin. In dem Aufnahmeraum 2c sind der Sensor 20 zumindest teilweise, die Druckstückeinheit 10 und die ersten und zweiten Bremskörper 3, 4 angeordnet. Zur Verminderung des Verschleißes der Bremskörper 3, 4 kann der Aufnahmeraum 2c zumindest teilweise ölgefüllt sein. Alternativ kann der Aufnahmeraum nicht ölgefüllt, sondern gasgefüllt sein, um eine zu starke Erwärmung bei großen Drehzahlen zu vermeiden.

Das Druckstück 12 weist eine Ausnehmung 17, insbesondere eine sacklochförmige Ausnehmung 17 oder Sackbohrung, auf, deren Öffnung zu dem Sensor 20 hin weist. In der Ausnehmung 17 sind ein Detektionskörper 13, eine Feder 14 und ein hülsenförmiges Anschlagteil 15 angeordnet. Das Anschlagteil 15 kann beispielsweise in die Ausnehmung 17 eingeschraubt, eingepresst oder eingeklebt sein. Das Anschlagteil 15 ist vorteilhaft axialfest mit dem Druckstück 12 verbunden oder gefügt. Das Anschlagteil 15 bildet an seinem zum Boden der Ausnehmung 17 weisenden Ende einen Axialanschlag 16 für den Detektionskörper 13. Der Detektionskörper 13 weist eine Außenumfangsfläche auf, mit der er an einer Innenumfangsfläche des hülsenförmigen Anschlagteils 15 axial bewegbar und geführt ist. Der Detektionskörper 13 weist ferner eine als ringförmiger Kragen ausgebildete Abragung 13a auf, die sich radial nach außen erstreckt und zwischen dem Axialanschlag 16 und dem Boden der Ausnehmung 17 angeordnet ist. Die Abragung 13a des Detektionskörpers 13 ist zwischen dem Boden der Ausnehmung 17 und dem Axialanschlag 16 des Anschlagteils 15 hin und her verschiebbar. Die Feder 14 ist zwischen dem Detektionskörper 13 und dem Boden der Ausnehmung 17 angeordnet und spannt den Detektionskörper 13 in Richtung zu dem Sensor 20 hin vor. Die Feder 14 stützt sich an dem Detektionskörper 13 und dem Druckstück 12 ab. Insbesondere erstreckt sich die Feder 14 für eine kompakte Bauweise in den hülsenförmigen Detektionskörper 13 und stützt sich an einer Stirnwand im Inneren des Detektionskörpers 13 axial ab.

Wenn die Bremse 1 geöffnet wird, wird das Druckstück 12 in die zweite Richtung (nach links in der Figur 2) verschoben, wobei die Feder 14 den Detektionskörper 13 gegen die stirnseitig am Sensor 20 gebildete Sensorfläche 21 drückt bzw. die Sensorfläche 21 des gehäusefesten Sensors 20 eine Verschiebung des Detektionskörpers 13 in die zweite Richtung blockiert. Während das Druckstück 12 zusammen mit dem Anschlagteil 15 in die zweite Richtung bewegt wird, steht der Detektionskörper 13 in Bezug auf das Gehäuse 2 oder den Sensor 20 still, wodurch sich das Druckstück 12 relativ zu dem Detektionskörper 13 axial verschiebt. Dabei wird die Feder 14 gespannt. Die Abragung 13a des Detektionskörpers 13 hebt sich von dem Axialanschlag 16 um einen Weg x ab, der wie in dem Beispiel gezeigt, dem Weg entsprechen kann (aber nicht muss) um den sich das Druckstück 12 von dem Bremskörpern 3, 4 abhebt. Wenn die Bremse 1 geschlossen wird (Fig. 3 und 4), wird das Druckstück 12 in die erste Richtung relativ zu dem Gehäuse 2 verschoben, wobei die sich entspannende Feder 14 den Detektionskörper 13 mit seiner Detektionsfläche 11 an den Sensor 20 angedrückt hält, während sich das Druckstück 12 zusammen mit dem Anschlagteil 15 relativ zu dem Detektionskörper 13 axial bewegt. Wenn die Bremse 1 bzw. die Bremskörper 3, 4 nicht verschlissen sind, ist die Bremse 1 geschlossen, das heißt die gewünschte Bremswirkung erzielt, bevor die Abragung 13a des Detektionskörpers 13 an den Axialanschlag 16 anstößt oder an den Axialanschlag 16 zwar angestoßen ist und das Druckstück 12 den Detektionskörper 13 nur so weit mitgenommen hat, dass der Sensor 20 noch keine Lageänderung zwischen Detektionsfläche 11 und Sensor 20 detektiert hat (Fig.3). Die Bremse 1 ist somit nicht verschlissen oder nur so weit verschlissen, dass die Verschleißgrenze noch nicht erreicht ist.

Wenn die Bremse 1 so weit verschlissen ist, dass die Verschleißgrenze erreicht ist, stößt der Axialanschlag 16 des Anschlagteils 15 während der Bewegung des Druckstücks 12 in die erste Richtung während des Schließens der Bremse 1, insbesondere am Ende des ersten Wegs x an den Detektionskörper 13, insbesondere die Abragung 13a, an und nimmt den Detektionskörper 13 um einen Weg y mit (Fig. 4), wodurch die Detektionsfläche 11 um diesen Weg y von dem Sensor 20 bzw. dessen Sensorfläche 21 abgehoben wird. Der Weg y bzw. die Änderung des Lageverhältnisses ist dabei so groß, dass der Sensor auf diese Änderung des Lageverhältnisses anspricht und ein Signal ausgibt, aus dem die Änderung des Lageverhältnisses ermittelbar ist.

### Bezugszeichenliste

- 1: Bremse
- 2: Gehäuse
- 2a: Schraubenbolzen
- 2b: Flansch
- 2c: Aufnahmeraum
- 2d: erster Bremskörperhalter
- 2e: (erste) Wand
- 2f: (zweite) Wand
- 3: erste Bremskörper
- 4: zweite Bremskörper
- 5: (Hohl-)Welle
- 5a: Wellendichtring
- 5b: zweiter Bremskörperhalter
- 5d: Verbindungselement
- 6: Druckkammer
- 7: erste Dichtung
- 8: zweite Dichtung
- 9: Drehlager

- 10: Druckstückeinheit
- 11: Detektionsfläche
- 12: Druckstück
- 13: Detektionskörper
- 13a: radiale Abragung / Kragen
- 14: Feder
- 15: Anschlagteil
- 16: Axialanschlag
- 17: Ausnehmung
- 18: Bremsfeder

- 20: Sensor
- 21: Sensorfläche

- x: Verschiebeweg
- y: Verschiebeweg bei Erreichen der Verschleißgrenze

- D: Drehachse

## Patentansprüche

1. Bremse (1) mit einer Einrichtung zur Ermittlung einer Verschleißgrenze, umfassend:
- ein Gehäuse (2),
- mindestens einen ersten Bremskörper (3), mindestens einen zweiten Bremskörper (3) und eine Druckstückeinheit (10) mit einem Druckstück (12), das relativ zu dem Gehäuse (2) in eine erste Richtung verschiebbar ist, um den mindestens einen ersten Bremskörper (3) und den mindestens einen zweiten Bremskörper (4) zum Bremsen gegeneinander zu drücken, d.h. die Bremse zu schließen, und in eine zweite Richtung zum Lösen der Bremse verschiebbar ist, d.h. die Bremse zu öffnen, und
- einen Sensor (20), der ausgebildet ist, ein Lageverhältnis zwischen ihm und einer an der Druckstückeinheit (10) gebildeten Detektionsfläche (11) zu detektieren,
- wobei, wenn die Bremse (1) ihre Verschleißgrenze erreicht hat, sich das Lageverhältnis zwischen dem Sensor (20) und der Detektionsfläche (11) während der Bewegung des Druckstücks (12) in die erste Richtung durch eine Relativbewegung zwischen dem Sensor (20) und der Detektionsfläche (11) ändert,
**dadurch gekennzeichnet, dass,**
- wenn die Bremse (1) ihre Verschleißgrenze nicht erreicht hat, sich das Lageverhältnis zwischen dem Sensor (20) und der Detektionsfläche (11) während der Bewegung des Druckstücks (12) in die erste Richtung nicht ändert.

2. Bremse (1) nach Anspruch 1, wobei der Sensor (20) ein induktiver Sensor, ein kapazitiver Sensor, ein Reedkontakt oder ein Mikroschalter ist.

3. Bremse (1) nach Anspruch 1 oder 2, wobei der Sensor (20) ausgebildet ist, ein Signal auszugeben, aus dem die Änderung des Lageverhältnisses ermittelbar ist.

4. Bremse (1) nach einem der Ansprüche 1 bis 3, wobei, wenn die Bremse ihre Verschleißgrenze erreicht hat, das Druckstück (12) während der Bewegung des Druckstücks (12) in die erste Richtung um einen ersten Weg (x) bewegbar ist, bei dem sich das Lageverhältnis zwischen dem Sensor und (20) und der Detektionsfläche (11) nicht ändert und um einen zweiten Weg (y) bewegbar ist, bei dem sich das Lageverhältnis durch eine Relativbewegung zwischen dem Sensor (20) und der Detektionsfläche (11) ändert.

5. Bremse (1) nach einem der Ansprüche 1 bis 4, wobei die Druckstückeinheit (10) einen Detektionskörper (13), der relativ zu dem Druckstück (12) verschiebbar ist und die Detektionsfläche (11) aufweist, umfasst.

6. Bremse (1) nach Anspruch 5, wobei die Druckstückeinheit (10) einen Anschlag (16) aufweist, der ausgebildet ist, eine Bewegung des Detektionskörpers (13) zu dem, beispielsweise gehäusefesten, Sensor (20) hin zu blockieren.

7. Bremse (1) nach Anspruch 5 oder 6, wobei die Druckstückeinheit (10) ferner eine Feder (14) umfasst, die den Detektionskörper (13) in eine Richtung zu dem Sensor (20) hin spannt.

8. Bremse (1) nach Anspruch 6 und 7, wobei der Anschlag (16) von einem Anschlagteil (15) gebildet wird, das zusammen mit dem Detektionskörper (13) in einer Ausnehmung (17) oder Bohrung, des Druckstücks (12) aufgenommen ist, wobei der Detektionskörper (13) axial zwischen dem Anschlagteil (15) und dem Druckstück (12) angeordnet ist und die Feder (14) sich am Detektionskörper (13) und dem Druckstück (12) abstützt.

9. Bremse (1) nach Anspruch 7 oder 8, wobei die Feder (14) den Detektionskörper (13) mit seiner Detektionsfläche (11) an den gehäusefesten Sensor (20) drückt, während das Druckstück (12) um einen ersten Weg (x) in die erste Richtung bewegt wird, wobei der Detektionskörper (13) am Ende des ersten Wegs (x) an einem relativ zum Druckstück (12) feststehenden Anschlag (16) anstößt, wodurch der Detektionskörper (13) die Bewegung des Druckstücks (12) in die erste Richtung mitmacht und die Detektionsfläche (11) von dem Sensor (20), beispielsweise um einen zweiten Weg (y), wegbewegt wird.

10. Bremse (1) nach einem der Ansprüche 1 bis 9, wobei das Gehäuse (2) und eine relativ zu dem Gehäuse (2) um die Drehachse (D) drehbar gelagerte Welle (5), mit welcher der mindestens eine zweite Bremskörper (4) verdrehfest verbunden ist, einen zumindest teilweise ölgefüllten Aufnahmeraum (2c) einfassen, wobei die Druckstückeinheit (10) und zumindest teilweise der Sensor (20), vorzugsweise auch der mindestens eine erste Bremskörper (3) und der mindestens eine zweite Bremskörper (4) in dem Aufnahmeraum (2c) angeordnet sind.

11. Bremse (1) nach einem der Ansprüche 1 bis 10, ferner umfassend einen zweiten Bremskörperhalter (5b), der relativ zu dem Gehäuse (2) um eine Drehachse drehbar ist, wobei der mindestens eine erste Bremskörper (3) verdrehfest am Gehäuse (2) oder einem ersten Bremskörperhalter (2d) und der mindestens eine zweite Bremskörper (3) verdrehfest an dem zweiten Bremskörperhalter (5b) befestigt ist.

12. Bremse (1) nach einem der Ansprüche 1 bis 11, ferner umfassend einen Druckraum (6), der so ausgebildet ist, dass er, wenn er mit einem Fluid bedruckt wird, das Druckstück (12) in die zweite Richtung bewegt.

13. Bremse (1) nach dem vorhergehenden Anspruch, ferner umfassend mindestens eine vorgespannte Bremsfeder (18), welche auf das Druckstück (12) wirkt und das Druckstück (12) in die erste Richtung verschiebt, wenn der Druckraum (6) druckentlastet wird, und welche durch Bedrucken des Druckraums (6) und der damit verursachten Bewegung des Druckstücks (12) in die zweite Richtung gespannt wird.

## Claims

1. A brake (1) comprising a device for ascertaining a wear limit, the brake (1) comprising:
- a housing (2);
- at least one first brake body (3), at least one second brake body (4) and a pressure piece unit (10) comprising a pressure piece (12) which can be moved relative to the housing (2) in a first direction in order to press the at least one first brake body (3) and the at least one second brake body (4) against each other for the purpose of braking, i.e. to apply the brake, and in a second direction in order to release the brake; and
- a sensor (20) designed to detect a positional relationship between itself and a detection surface (11) formed on the pressure piece unit (10),
- wherein, if the brake (1) has reached its wear limit, the positional relationship between the sensor (20) and the detection surface (11) changes during the movement of the pressure piece (12) in the first direction due to a relative movement between the sensor (20) and the detection surface (11),
**characterised in that**
- if the brake (1) has not reached its wear limit, the positional relationship between the sensor (20) and the detection surface (11) does not change during the movement of the pressure piece (12) in the first direction.

2. The brake (1) according to claim 1, wherein the sensor (20) is an inductive sensor, a capacitive sensor, a reed switch or a microswitch.

3. The brake (1) according to claim 1 or 2, wherein the sensor (20) is designed to output a signal from which the change in the positional relationship can be ascertained.

4. The brake (1) according to any one of claims 1 to 3, wherein if the brake has reached its wear limit, the pressure piece (12) can be moved during its movement in the first direction by a first distance (x), at which the positional relationship between the sensor (20) and the detection surface (11) does not change, and by a second distance (y) at which the positional relationship does change due to a relative movement between the sensor (20) and the detection surface (11).

5. The brake (1) according to any one of claims 1 to 4, wherein the pressure piece unit (10) comprises a detection body (13) which can be moved relative to the pressure piece (12) and which comprises the detection surface (11).

6. The brake (1) according to claim 5, wherein the pressure piece unit (10) comprises an abutment (16) which is designed to block a movement of the detection body (13) towards the sensor (20), which is for example fixed relative to the housing.

7. The brake (1) according to claim 5 or 6, wherein the pressure piece unit (10) also comprises a spring (14) which tenses the detection body (13) in a direction towards the sensor (20).

8. The brake (1) according to claim 6 or 7, wherein the abutment (16) is formed by an abutment part (15) which is accommodated, together with the detection body (13), in a recess (17) or bore in the pressure piece (12), wherein the detection body (13) is arranged axially between the abutment part (15) and the pressure piece (12), and the spring (14) is supported on the detection body (13) and the pressure piece (12).

9. The brake (1) according to claim 7 or 8, wherein the spring (14) presses the detection surface (11) of the detection body (13) onto the sensor (20) which is fixed relative to the housing, while the pressure piece (12) is moved by a first distance (x) in the first direction, wherein at the end of the first distance (x), the detection body (13) abuts against an abutment (16) which is fixed relative to the pressure piece (12), thus causing the detection body (13) to participate in the movement of the pressure piece (12) in the first direction and moving the detection surface (11) away from the sensor (20), for example by a second distance (y).

10. The brake (1) according to any one of claims 1 to 9, wherein the housing (2) and a shaft (5), which is mounted such that it can be rotated about the rotational axis (D) relative to the housing (2) and to which the at least one second brake body (4) is connected such that it cannot be rotated, enclose an accommodating space (2c) which is at least partially filled with oil, wherein the pressure piece unit (10) and at least partially the sensor (20), and preferably also the at least one first brake body (3) and the at least one second brake body (4), are arranged in the accommodating space (2c).

11. The brake (1) according to any one of claims 1 to 10, further comprising a second brake body holder (5b) which can be rotated about a rotational axis relative to the housing (2), wherein the at least one first brake body (3) is fastened, such that it cannot be rotated, to the housing (2) or to a first brake body holder (2d), and the at least one second brake body (4) is fastened, such that it cannot be rotated, to the second brake body holder (5b).

12. The brake (1) according to any one of claims 1 to 11, further comprising a pressure space (6) which is designed such that when it is pressurised by a fluid, it moves the pressure piece (12) in the second direction.

13. The brake (1) according to the preceding claim, further comprising at least one biased brake spring (18) which acts on the pressure piece (12) and moves the pressure piece (12) in the first direction when the pressure space (6) is relieved of pressure, and which is tensed by pressurising the pressure space (6) and the resultant movement of the pressure piece (12) in the second direction.

## Revendications

1. Frein (1) comportant un dispositif pour déterminer une limite d'usure, le frein (1) comprenant :
- un boîtier (2) ;
- au moins un premier corps de frein (3), au moins un second corps de frein (4) et une unité de pièce de pression (10) comportant une pièce de pression (12) déplaçable par rapport au boîtier (2) dans une première direction afin de presser ledit au moins un premier corps de frein (3) et ledit au moins un second corps de frein (4) l'un contre l'autre pour le freinage, soit afin d'appliquer le frein, et dans une seconde direction pour desserrer le frein, soit afin de débloquer le frein ; et
- un capteur (20) conçu pour détecter une relation de position entre le capteur (20) et une surface de détection (11) formée sur l'unité de pièce de pression (10),
- la relation de position entre le capteur (20) et la surface de détection (11) se modifiant pendant le déplacement de la pièce de pression (12) dans la première direction en raison d'un déplacement relatif entre le capteur (20) et la surface de détection (11), lorsque le frein (1) a atteint sa limite d'usure, **caractérisé en ce que**
- la relation de position entre le capteur (20) et la surface de détection (11) ne se modifie pas pendant le déplacement de la pièce de pression (12) dans la première direction, lorsque le frein (1) n'a pas atteint sa limite d'usure.

2. Frein (1) selon la revendication 1, dans lequel le capteur (20) est un capteur inductif, un capteur capacitif, un interrupteur à lame souple ou un microrupteur.

3. Frein (1) selon la revendication 1 ou 2, dans lequel le capteur (20) est conçu pour délivrer un signal à partir duquel la modification de la relation de position peut être déterminée.

4. Frein (1) selon l'une quelconque des revendications 1 à 3, dans lequel la pièce de pression (12) est déplaçable pendant le déplacement de la pièce de pression (12) dans la première direction par un premier trajet (x) où la relation de position entre le capteur (20) et la surface de détection (11) ne se modifie pas, et par un second trajet (y) où la relation de position se modifie en raison d'un déplacement relatif entre le capteur (20) et la surface de détection (11), lorsque le frein a atteint sa limite d'usure.

5. Frein (1) selon l'une quelconque des revendications 1 à 4, dans lequel l'unité de pièce de pression (10) comprend un corps de détection (13) déplaçable par rapport à la pièce de pression (12) et présentant la surface de détection (11).

6. Frein (1) selon la revendication 5, dans lequel l'unité de pièce de pression (10) présente une butée (16) conçue pour bloquer un déplacement du corps de détection (13) vers le capteur (20) qui est par exemple fixe par rapport au boîtier.

7. Frein (1) selon la revendication 5 ou 6, dans lequel l'unité de pièce de pression (10) comprend en outre un ressort (14) qui tend le corps de détection (13) en direction vers le capteur (20).

8. Frein (1) selon les revendications 6 et 7, dans lequel la butée (16) est formée par une partie de butée (15) reçue avec le corps de détection (13) dans un évidement (17) ou un perçage de la pièce de pression (12), le corps de détection (13) étant disposé axialement entre la partie de butée (15) et la pièce de pression (12), le ressort (14) s'appuyant sur le corps de détection (13) et la pièce de pression (12).

9. Frein (1) selon la revendication 7 ou 8, dans lequel le ressort (14) presse la surface de détection (11) du corps de détection (13) contre le capteur (20) fixe par rapport au boîtier, tandis que la pièce de pression (12) est déplacée dans la première direction par un premier trajet (x), le corps de détection (13) venant en butée contre une butée (16) fixe par rapport à la pièce de pression (12) à la fin du premier trajet (x), de sorte que le corps de détection (13) suit le déplacement de la pièce de pression (12) dans la première direction et la surface de détection (11) est éloignée du capteur (20), par exemple par un second trajet (y).

10. Frein (1) selon l'une quelconque des revendications 1 à 9, dans lequel le boîtier (2) et un arbre (5) monté de manière rotative par rapport au boîtier (2) autour de l'axe de rotation (D), auquel ledit au moins second corps de frein (4) est relié de manière fixe en rotation, entourent un espace de réception (2c) au moins partiellement rempli d'huile, l'unité de pièce de pression (10) et au moins partiellement le capteur (20), de préférence également ledit au moins premier corps de frein (3) et ledit au moins second corps de frein (4), étant disposés dans l'espace de réception (2c).

11. Frein (1) selon l'une quelconque des revendications 1 à 10, comprenant en outre un second support de corps de frein (5b) rotatif par rapport au boîtier (2) autour d'un axe de rotation, ledit au moins un premier corps de frein (3) étant fixé de manière fixe en rotation au boîtier (2) ou à un premier support de corps de frein (2d), ledit au moins un second corps de frein (4) étant fixé de manière fixe en rotation au second support de corps de frein (5b).

12. Frein (1) selon l'une quelconque des revendications 1 à 11, comprenant en outre un espace de pression (6) conçu de telle sorte qu'il déplace la pièce de pression (12) dans la seconde direction, lorsqu'il est pressurisé par un fluide,

13. Frein (1) selon la revendication précédente, comprenant en outre au moins un ressort de frein précontraint (18) qui agit sur la pièce de pression (12) et déplace la pièce de pression (12) dans la première direction lorsque l'espace de pression (6) est dépressurisé, et qui est tendu dans la seconde direction par la mise sous pression de l'espace de pression (6) et le déplacement résultant de la pièce de pression (12).
